# EUROPEAN PATENT APPLICATION

(11) **EP 4 682 978 A1**
(43) Date of publication of application: **21.01.2026**
(21) Application number: 24854399.3
(22) Date of filing: 08.08.2024
(51) Int. Cl.: H01M 4/36, H01M 4/525, H01M 4/131, H01M 10/052, H01M 4/505, H01M 4/1391, H01M 4/02

(54) **POSITIVE ELECTRODE ACTIVE MATERIAL, AND POSITIVE ELECTRODE AND LITHIUM SECONDARY BATTERY INCLUDING SAME**

(30) Priority: 11.08.2023 KR 20230105931; 06.10.2023 KR 20230133819; 18.01.2024 KR 20240008351
(71) Applicant: LG Energy Solution, Ltd., Seoul 07335 (KR)
(72) Inventor: LEE, Si Yeol, Daejeon 34122 (KR); PARK, Byung Chun, Daejeon 34122 (KR); KIM, Ji Hye, Daejeon 34122 (KR); CHAE, Seul Ki, Daejeon 34122 (KR); LEE, Sang Yeop, Daejeon 34122 (KR); KIM, Sang Woo, Daejeon 34122 (KR)
(74) Representative: Hoffmann Eitle
(86) International application number: PCT/KR2024/011813
(87) International publication number: WO 2025/037848

(57) **Abstract**

The present invention provides a positive electrode active material including a lithium composite transition metal oxide containing nickel, cobalt, manganese, and aluminum, wherein an amount of nickel among metal other than lithium in the lithium composite transition metal oxide is 90 mol% or greater, and a molar ratio Al/Ni of aluminum to nickel is 0.015 to 0.034, and the present invention provides a positive electrode and a lithium secondary battery including the positive electrode active material.

## Description

### TECHNICAL FIELD

This application claims priority from Korean Patent Application Nos. 10-2023-0105931, filed on August 11, 2023, 10-2023-0133819, filed on October 6, 2023, and 10-2024-0008351, filed on January 18, 2024, the disclosures of which are incorporated by reference herein.

The present invention relates to a positive electrode active material, and a positive electrode and a lithium secondary battery including the same.

### BACKGROUND ART

Recently, with the rapid spread of battery-using electronic devices, such as mobile phones, laptop computers, and electric vehicles, demand for a small-sized and light-weighted secondary battery with relatively high capacity is increasing rapidly. In particular, a lithium secondary battery, which is light-weighted and has a high-energy density, is in the spotlight as a driving power source of a portable device. Accordingly, research and development for improving performance of the lithium secondary battery are being actively conducted.

The lithium secondary battery produces electrical energy by oxidation and reduction reactions occurred when lithium ions are intercalated and deintercalated into/from a positive electrode and a negative electrode in a state where an organic electrolyte solution or a polymer electrolyte solution is charged between the positive electrode and the negative electrode containing active materials capable of intercalation and deintercalation of the lithium ions.

As a positive electrode active material of the lithium secondary battery, lithium cobalt oxide (LiCoO₂), lithium nickel oxide (LiNiO₂), lithium manganese oxide (LiMnO₂, LiMn₂O₄, or the like), lithium iron phosphate compound (LiFePO₄), etc. were used. In addition, in order to improve the low thermal stability of LiNiO₂ while maintaining excellent reversible capacity thereof, a lithium composite metal oxide where some nickel (Ni) elements were substituted with cobalt (Co) and manganese (Mn) (hereinafter, simply referred to as a'NCM-based lithium composite transition metal oxide') was developed. However, the conventionally-developed NCM-based lithium composite transition metal oxide has a limitation in application because it has insufficient capacity characteristics.

Recently, in order to improve this problem, research on increasing the amount of Ni in the NCM-based lithium composite transition metal oxide has been conducted. However, a high-Ni positive electrode active material, having a high nickel content, has a problem in that a large amount of gas is generated during a charging and discharging process due to high reactivity of nickel, and due to cation mixing and oxygen deintercalation, a lattice structure is largely unstable, and the amount of lithium impurities remaining on a surface increases.

Therefore, development of a positive electrode material including high content of nickel to provide an excellent capacity, and at the same time, capable of securing structural stability is being required.

### DISCLOSURE OF THE INVENTION

### TECHNICAL PROBLEM

The present invention is to provide a positive electrode active material with improved dispersibility, and a positive electrode slurry, a positive electrode, and a lithium secondary battery including the same.

### TECHNICAL SOLUTION

The present invention provides a positive electrode active material including a lithium composite transition metal oxide containing nickel, cobalt, manganese, and aluminum,
wherein an amount of nickel is 90 mol% or greater among metal other than lithium in the lithium composite transition metal oxide, and a molar ratio Al/Ni of aluminum to nickel is 0.015 to 0.034.

In addition, the present invention provides a positive electrode including a positive electrode current collector; and a positive electrode active material layer provided on at least one side of the positive electrode current collector, and the positive electrode active material layer contains the positive electrode active material previously described.

In addition, the present invention provides a lithium secondary battery including the positive electrode previously described; a negative electrode including a negative electrode active material; a separator disposed between the positive electrode and the negative electrode; and an electrolyte.

### ADVANTAGEOUS EFFECTS

A positive electrode active material, according the present invention, has a high content of nickel, and thus is excellent in capacity, and therefore, usage of cobalt may be reduced, which is advantageous in terms of material supply and price.

Furthermore, an NCMA oxide has an optimal molar ratio of Al/Ni that allows balanced improvement in doping yield, resistance characteristics, and structural stability, and therefore, by including the NCMA oxide, a lithium secondary battery with improved charge and discharge capacities and high-temperature lifetime may be provided.

### BRIEF DESCRIPTION OF THE DRAWINGS

FIG. 1 is a graph showing changes in heat flow according to a temperature of a positive electrode active material including a lithium composite transition metal oxide prepared according to examples and comparative examples.
FIG. 2 is a graph showing a capacity retention rate and an increase rate of resistance, at high temperature, of each of half-cells including lithium composite transition metal oxides, as positive electrode active materials, prepared according to examples and comparative examples.

### MODE FOR CARRYING OUT THE INVENTION

Hereinafter, the present invention will be described in detail.

In the present invention, an amount of each element in a positive electrode active material may be measured by using inductively coupled plasma optical emission spectroscopy (ICP-OES). In particular, this means that 0.03 g of the positive electrode active material to be analyzed is dispersed and dissolved in 1 mL of hydrochloric acid, then small amounts of hydrogen peroxide and hydrofluoric acid are added thereto, then the solution is diluted in 50 mL of ultra-pure water, and the diluted solution is then analyzed using an instrument of Avio series (PerkinElmer, Inc).

In the present invention, a "primary particle" refers to a particle unit in which a grain boundary is not present in appearance when observed at 5000 times to 20000 times magnification using a scanning electron microscope.

In the present invention, an "a-axis" and a "c-axis" refer to axis directions in a crystal structure of the primary particle. The crystal structure of the primary particle is obtained by analysis of transmission electron microscope-selected area electron diffraction (TEM-SAED). The length of the c-axis direction and the length of the a-axis direction may be quantitatively analyzed using X-ray diffraction (XRD) by Cu Kα X-ray.

In the present invention, the "X-ray diffraction (XRD) analysis" may be performed in a way that a particle to be measured is placed in a holder and irradiated with an X-ray, and the resulting diffraction lattice is analyzed. Sampling was prepared such that a powder sample of the particle to be measured is placed in a groove in the center of a general powder holder, the surface was leveled using a slide glass, and the height of the sample was adjusted to be equal to the edge of the holder. Thereafter, using Bruker D8 Endeavor (light source: Cu Kα, A=1.54 Å) equipped with a LynxEye XE-T position sensitive detector, an X-ray diffraction analysis was conducted for a region of FDS 0.5 ° and 2 θ=15 °to 90 °under conditions of 0.02 degree of step size and about 20 minutes of total scan time. For the data measured, Rietveld refinement was performed in consideration of charge for each site (metal ions of transition metal site: +3, Ni ions of Li site: +2) and cation mixing. Instrumental brodadening was considered using fundamental parameter approach (FPA) implemented in a Brunker TOPAS program, and in fitting, the entire peaks of the measurement range were used. As a peak shape, Lorenzian contribution was only used in fitting as first principle (FP) among the possible peak types in TOPAS, and at this time, strain was not considered.

In the present invention, "particle strength" is a value obtained in a way that a powder to be measured is placed in Step 500 of Anton Paar, which is a micro compression testing machine, a shape of a particle to be measured is obtained using a microscope, then force is applied to the particle using a tip, and a force when the particle breaks is expressed in pressure (MPa). By mapping the values measured more than 10 times in consideration of deviation between the particles, the average value is used as a particle strength value.

In the present invention, "D₅₀" refers to a particle diameter corresponding to 50% of cumulative volume in a cumulative volume particle size distribution of particle powder to be measured, and may be measured using a laser diffraction method. For example, after a positive electrode active material powder is dispersed in a dispersion medium, the dispersion medium is introduced into a commercial laser diffraction particle size measurement instrument (e.g., Mastersizer 3000 of Malvern) and irradiated with ultrasonic waves of about 28 kHz at an output of 60 W, and then a cumulative-volume particle size distribution graph is obtained, and the particle diameter at 50% of the cumulative volume in the obtained cumulative-volume particle size distribution graph may then be calculated therefrom.

Hereinafter, each component of the present invention will be described in more detail.

### <Positive Electrode Active Material>

The present invention relates to a positive electrode active material, and particularly to a positive electrode active material for a lithium secondary battery.

The positive electrode active material according to the present invention includes a lithium composite transition metal oxide containing nickel, cobalt, manganese, and aluminum, an amount of nickel, among metal other than lithium in the lithium composite transition metal oxide, is 90 mol% or greater, and a molar ratio Al/Ni of aluminum to nickel is 0.015 to 0.034.

As previously described, if the amount of nickel is increased in the lithium composite transition metal oxide, high capacity may be achieved, but there is a problem of decreased structural stability. In particular, a high-Ni positive electrode active material has a large amount of lithium compounds remaining on a surface, and this may cause deterioration of stability, such as generating side reactions, during a charging and discharging process, to cause gas generation.

In addition, the high-Ni positive electrode active material has a disadvantage of having a lot of changes in the lattice constant, that is, volume changes in the unit lattice, and such volume changes cause cracks occurring in the active material particle. Such cracks occurred may cause incidence of voids in the active material, resulting in deterioration in performance of a battery.

Furthermore, the higher the amount of nickel, the more the cation mixing of lithium ions and nickel ions occur, which hinders movement of lithium ions during operation of the battery, causing increase of battery resistance and deterioration of lifetime.

Accordingly, the present inventors resolved the above problem by adjusting the ratio of nickel and a doping element in an ultra-high-Ni positive electrode active material containing nickel in the amount of 90 mol% or greater, specifically by adjusting the molar ratio of Ni and Al in the lithium composite transition metal oxide (hereinafter, NCMA oxide) containing NI, Co, Mn, and Al, to an optimal range. Al may reduce the volume change in the unit lattice of the NCMA oxide having Ni in the amount of 90 mol% or greater, thereby suppressing cracks occurring in the active material particles and reducing the voids to prevent deterioration. Therefore, the positive electrode active material, according to the present invention, may achieve excellent thermal stability and lifetime characteristics as well as high capacity. However, since Al does not contribute to the capacity, and an excessive amount of Al may rather interfere with the capacity development, it is important to adjust the amount of Al relative to Ni appropriately.

In particular, the molar ratio Al/Ni of aluminum to nickel may be 0.015 or greater, 0.021 or greater, or 0.030 or greater, and 0.034 or less or 0.032 or less. When the ratio of Al/Ni is less than 0.015, rapid volume change in the unit lattice, caused by the increase in the amount of nickel, causes deterioration of lifetime characteristics and increase in structural instability, so that the main peak temperature at which heat flow is maximum decreases, making it difficult to achieve the effect previously described. On the other way, when the ratio is greater than 0.034, the excessive amount of Al may not be incorporated into a layered structure and interfere with movement of lithium ions as undoped residues remaining on the surface of the active material, so that the surface resistance increases and the capacity to be developed decreases, and in that respect, the ratio is undesirable.

In an embodiment of the present invention, the amount of nickel, among metal other than lithium in the lithium composite transition metal oxide, may be 92 mol% or greater, preferably 93 mol% or greater, and more preferably 93 mol% to 95 mol%. In this case, it is desirable in that the amount of Al may be secured above a certain level while the high capacity is achieved.

In addition, an amount of cobalt, among the metal other than lithium in the lithium composite transition metal oxide, may be 0.1 mol% to 1.0 mol%, preferably 0.2 mol% to 0.9 mol%, and more preferably 0.4 mol% to 0.8 mol%. That is, in the present invention, by adjusting the molar ratio of Al/Ni, lifetime, resistance, and output characteristics are improved while minimizing the amount of cobalt which is expensive.

In addition, an amount of aluminum, among the metal other than lithium in the lithium composite transition metal oxide, may be 1.0 mol% to 5.0 mol%, preferably 1.5 mol% to 4.0 mol%, and more preferably 2.0 mol% to 3.8 mol%. When the amount of aluminum falls within the above ranges, it is easy to adjust the molar ratio of Al/Ni to the above-described optimal range in the NCMA oxide containing nickel in the amount of 90 mol% or greater.

In particular, the lithium composite transition metal oxide may have a composition represented by Chemical Formula 1 below.

[Chemical Formula 1] Li₁₊ₓ(NiₐCo_{b}Mn_{c}Al_{d}M1ₑ)O₂

In Chemical Formula 1 above,
M1 is one or more selected from the group consisting of Ti, Zr, W, Mo, Nb, Cu, Fe, V, Cr, Zn, In, Ta, Y, La, Sr, Ga, Sc, Gd, Sm, Ca, Ce, Mg, and B,
x, a, b, c, d, and e satisfy -0.2≤x≤0.2, 0.90≤a<1, 0<b≤0.01, 0<c≤0.05, 0<d≤0.05, 0≤e≤0.05, respectively, and a+b+c+d+e=1.
1+x above refers to a molar ratio of lithium in the lithium composite transition metal oxide, wherein -0.1≤x≤0.2 or 0≤x≤0.2 may be satisfied. When the molar ratio of lithium falls within the above ranges, a crystal structure of the lithium composite transition metal oxide may be stably formed.
a above refers to a molar ratio of nickel among the entire metal other than lithium in the lithium composite transition metal oxide, wherein 0.920≤a<1, 0.930≤a<1, or 0.930≤a≤0.950 may be satisfied. When the molar ratio of nickel falls within the above ranges, high energy density may be achieved, and thus, high capacity is possible.
b above refers to a molar ratio of cobalt among the entire metal other than lithium in the lithium composite transition metal oxide, wherein 0<b≤0.009, 0<b≤0.008, or 0<b≤0.006 may be satisfied. When the molar ratio of cobalt falls within the above ranges, good resistance characteristics and output characteristics may be achieved with the minimum amount.
c above refers to a molar ratio of manganese among the entire metal other than lithium in the lithium composite transition metal oxide, wherein 0<c≤0.050, 0<c≤0.040, or 0<c≤0.030 may be satisfied. When the molar ratio of manganese falls within the above ranges, the positive electrode active material has excellent structural stability.
d above refers to a molar ratio of Al among the entire metal other than lithium in the lithium composite transition metal oxide, wherein d above may satisfy 0.010≤d≤0.050, 0.015≤d≤0.040, or 0.020≤d≤0.038.
e above refers to a molar ratio of an M1 element among the entire metal other than lithium in the lithium composite transition metal oxide, which may be adjusted as needed.

Meanwhile, the positive electrode active material may include a primary particle and a secondary particle in which the primary particles are aggregated, a ratio c/a of the length in a c-axis direction to the length in an a-axis direction of the primary particle may be 4.9400 to 4.9500, preferably 4.9400 to 4.9450, and more preferably 4.9405 to 4.9422. The ratio of c/a falling within the above ranges means that the positive electrode active material has a highly complete layered structure, and therefore, when the ratio of c/a falls within the above ranges, lithium ions move smoothly and the change in volume is small during charging and discharging, which is effective in improving the deterioration of lifetime characteristics caused by performing the cycle.

In addition, D₅₀ of the positive electrode active material is 8 µm to 15 µm, preferably 10 µm to 13 µm, and more preferably 11 µm to 12 µm, and the average particle diameter of primary particle is 0.3 µm to 2.0 µm, preferably 0.5 µm to 1.5 µm, and more preferably 0.7 µm to 1.0 µm, but is not limited thereto.

Meanwhile, since binding energy between Al and O is greater than binding energy between Ni and O, adjusting the molar ratio of Al/Ni to the above-described range has an effect on improving particle strength. For example, the positive electrode active material may have a particle strength of 142 MPa to 160 MPa, preferably 145 MPa to 155 MPa, and more preferably 150 MPa to 155 MPa. When the particle strength falls within the above ranges, fracture of the positive electrode active material may be minimized during an electrode rolling, so that side reactions with an electrolyte solution may be reduced, and therefore, the increase rate of resistance in a battery may be decreased.

Meanwhile, when heat flow of the positive electrode active material is measured using differential scanning calorimetry (DSC), the peak, in which the heat flow is maximum, may be observed at 219 °C to 230 °C, particularly 220 °C to 230 °C, and more particularly 225 °C to 230 °C.

Also, the maximum value of heat flow of the positive electrode active material, measured in a range of 25 °C to 300 °C through differential scanning calorimetry (DSC), may be 85.0 W/g or less, 70.0 W/g or less, or 60.0 W/g or less.

That is, in the positive electrode active material according to the present invention, the peak temperature at which the maximum heat flow is observed is relatively high, and the maximum value of heat flow is small, and thus, there is an advantage of relatively less risk of explosion even when the temperature rises inside the battery.

Meanwhile, the positive electrode active material may be prepared in a preparation method including providing a transition-metal-containing solution which includes a transition metal precursor, an ammonium cation complex forming agent, and a basic compound to a reactor to cause a coprecipitation reaction and thereby forming a composite transition metal precursor containing nickel in the amount of 90 mol% or greater; and
mixing the composite transition metal precursor, a lithium raw material, and an aluminum raw material and preforming heat treatment on the mixture to form a lithium composite transition metal oxide which is doped with Al.

At this time, the heat treatment may be performed at 600 °C to 900 °C, preferably 650 °C to 850 °C, and more preferably 700 °C to 800 °C for 15 hours to 24 hours.

The forming of the composite transition metal precursor may be prepared in a method where, for example, each transition metal precursor is dissolved in a solvent to prepare a transition-metal-containing solution, and then the transition-metal-containing solution, an ammonium cation complex forming agent, and a basic compound are mixed to perform a coprecipitation reaction. In addition, an oxidizing agent or oxygen gas may be further added, as needed, in the coprecipitation reaction.

Meanwhile, the transition metal precursor may be acetate, carbonate, nitrate, sulfate, halide, sulfide, etc. of each transition metal.

Specifically, a nickel precursor may be one or more selected from the group consisting of NiO, NiCO₃·2Ni (OH)₂·4H₂O, NiC₂O₂·2H₂O, Ni (NO₃)₂·6H₂O, NiSO₄, NiSO₄·6H₂O, and nickel sulfide, and a cobalt precursor may be one or more selected from the group consisting of Co (OH)₂, Co₃O₄, CoOOH, Co (OCOCH₃)₂·4H₂O, Co (NO₃)₂·6H₂O, and Co (SO₄)₂·7H₂O. In addition, a manganese precursor may be one or more selected from the group consisting of Mn₂O₃, MnO₂, Mn₃O₄, MnCO₃, Mn (NO₃)₂, MnSO₄·H₂O, manganese acetate, manganese halide, and manganese sulfide.

At this time, an amount of each of the transition metal precursors to be added may be determined in consideration of the molar ratio of transition metal in the positive electrode active material to be finally prepared.

Meanwhile, the ammonium cation complex forming agent may include at least one compound selected from the group consisting of NH₄OH, (NH₄)₂SO₄, NH₄NO₃, NH₄Cl, CH₃COONH₄, and NH₄CO₃, and may be added to the reactor in a form of a solution where the compound is dissolved in a solvent. At this time, as the solvent, water, or a mixture of water and an organic solvent capable of being mixed uniformly with water (specifically, alcohol, etc.) may be used.

The basic compound may be at least one compound selected from the group consisting of NaOH, KOH, and Ca(OH)₂, and may be added to the reactor in a form of a solution where the compound is dissolved in a solvent. At this time, as the solvent, water, or a mixture of water and an organic solvent capable of being mixed uniformly with water (specifically, alcohol, etc.) may be used.

As previously described, when the transition-metal-containing solution, the ammonium cation complex forming agent, and the basic compound are added to the reactor and agitated, the transition metals in the transition-metal-containing solution are coprecipitated to generate a precursor particle in a form of a transition metal hydroxide.

At this time, the transition-metal-containing solution, the ammonium cation complex forming agent, and the basic compound are each added in the amount that allows pH of the reaction solution to fall within a desired range.

When the precursor particle is formed in the above-described method, a precursor is obtained by separation from the reaction solution. For example, a precursor is separated from the reaction solution by filtering the reaction solution, and then the separated precursor is washed and dried to obtain a precursor. At this time, processes of grinding and/or sorting, etc. may also be performed as needed.

The composite transition metal precursor, prepared as above, and a precursor containing a lithium raw material and an M1 metal element are mixed and heat-treated to prepare a lithium composite transition metal oxide.

As the lithium raw material, a lithium-containing sulfate, nitrate, acetate, carbonate, oxalate, citrate, halide, hydroxide, oxyhydroxide, or the like may be used, and for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

Meanwhile, the lithium raw material and the composite transition metal precursor may be mixed such that a molar ratio of Li : the total metal in the precursor becomes 1:1 to 1.2:1, and preferably 1:1 to 1.1:1. When the mixed ratio of the lithium raw material and the metal in the precursor falls within the above ranges, the layered crystal structure of the lithium composite transition metal oxide may be well-developed, so that a positive electrode active material with excellent capacity characteristics and structural stability may be prepared.

In addition, the aluminum raw material may include an Al-containing oxide, hydroxide, oxyhydroxide, halide, nitrate, carbonate, acetate, oxalate, citrate, sulfate, or the like, and for example, Al₂O₃, Al (OH)₃, Al (NO₃)₃, Al₂(SO₄)₃, (HO)₂AlCH₃CO₂, HOAl (CH₃CO₂)₂, Al (CH₃CO₂)₃, aluminum halide, or a combination thereof. The aluminum raw material may also be added to the transition-metal-containing solution in the coprecipitation reaction, instead of being added together with the lithium raw material in the heat treatment.

If an M1 metal element is further doped, the type of the M1 metal element and the amount thereof to be added may be adjusted in consideration of the type and the amount of the M1 metal element included in the positive electrode active material previously described.

### <Positive Electrode>

Hereinafter, a positive electrode according to the present invention is described.

The positive electrode according to the present invention includes the positive electrode active material, and in particular, the positive electrode, according to the present invention, includes a positive electrode current collector; and a positive electrode active material layer provided on at least one side of the positive electrode current collector, and the positive electrode active material layer includes the positive electrode active material. Since the positive electrode active material is same as what is previously described, detailed description thereof is omitted, and the other components are only described in detail as follows.

The positive electrode current collector may include a highly conductive metal, and the metal is not particularly limited as long as it is non-reactive in a voltage range of a battery while the positive electrode active material layer is easily adhered thereto. Examples of the positive electrode current collector may include, for example, stainless steel, aluminum, nickel, titanium, calcined carbon, or aluminum or stainless steel that is surface-treated with carbon, nickel, titanium, silver, etc. In addition, the positive electrode current collector may generally have a thickness of 3 to 500 µm, and microscopic irregularities may be formed on a surface of the current collector to improve the adhesion of the positive electrode active material. For example, the positive electrode current collector may be used in various forms including a film, a sheet, a foil, a net, a porous body, a foam body, a non-woven fabric body, etc.

The positive electrode may be prepared according to a general preparation method for a positive electrode, except that the above-described positive electrode active material is used. In particular, a positive electrode slurry including the positive electrode active material is applied onto the positive electrode current collector, and then dried and pressed to prepare the positive electrode, or casting of the positive electrode slurry is performed on a separate support, and a film separated from the support is then laminated onto the positive electrode current collector to prepare the positive electrode.

In an embodiment of the present invention, the positive electrode includes the positive electrode active material layer which is formed by applying the positive electrode slurry, including the positive electrode active material, onto at least one side the positive electrode current collector.

Meanwhile, the positive electrode slurry may include the positive electrode active material, a binder, a conductive material, and a solvent.

Specifically, the binder may be any one or more selected from the group consisting of polyvinylidene fluoride (PVDF), polyvinylidene fluoride-hexafluoropropylene copolymer (PVDF-co-HFP), polyvinyl alcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrene-butadiene rubber (SBR), fluorine rubber, and various copolymers thereof, and preferably polyvinylidene fluoride.

The binder may be included in the amount of 0.5 wt% to 3 wt%, preferably 1 wt% to 3 wt%, and more preferably 1.5 wt% to 2.5 wt% on the basis of the total weight of solid content in the positive electrode slurry. When the amount of the binder falls within the above ranges, adhesion to the current collector and binding between the particles may be sufficiently secured, so that initial resistance may be maintained low while durability of the positive electrode may be improved.

The conductive material may be any one or more selected from the group consisting of graphite such as natural graphite or artificial graphite; carbon black including acetylene black, ketjen black, channel black, furnace black, lamp black, thermal black, etc.; a carbon-based material including a carbon fiber, carbon nanotube, etc.; a powder or fiber of metal including copper, nickel, aluminum, silver, etc.; a conductive whisker including zinc oxide, potassium titanate, etc.; a conductive metal oxide including titanium oxide, etc.; and a conductive polymer including a polyphenylene derivative, etc., preferably, a carbon nanotube or carbon black, and most preferably a carbon nanotube.

The conductive material may be included in the amount of 0.1 wt% to 2.5 wt%, preferably 0.5 wt% to 2 wt%, and more preferably 1 wt% to 2 wt% on the basis of the total weight of solid content in the positive electrode slurry. When the amount of the conductive material falls within the above ranges, it is desirable in that dead volume may be reduced while conductivity between the active materials is maintained.

In addition, the positive electrode slurry may further include a dispersant selectively, and the dispersant may be a hydrogenated nitrile butadiene rubber (HNBR).

Meanwhile, a solvent of the positive electrode slurry may be a solvent which is generally used in the relevant technical field, and for example, N-methylpyrrolidone (NMP), dimethyl sulfoxide (DMSO), isopropyl alcohol, dimethyl formamide (DMF), acetone, water, or a mixture of two or more thereof may be used. The solvent may be used by being adjusted such that the positive electrode slurry, previously described, has an appropriate viscosity. For example, the solvent may be included such that a concentration of the solid content in the positive electrode slurry becomes 60 wt% or greater, preferably 60 wt% to 90 wt%, and more preferably 60 wt% to 80 wt%.

### Lithium Secondary Battery

Hereinafter, a lithium secondary battery according to the present invention is described.

The lithium secondary battery includes, particularly, a positive electrode, a negative electrode containing a negative electrode active material, a separator disposed between the positive electrode and the negative electrode, and an electrolyte. Since the positive electrode is same as what is previously described, detailed description thereof is omitted, and the other components are only described in detail as follows.

In addition, the lithium secondary battery may selectively further include a battery case that accommodates an electrode assembly of the positive electrode, the negative electrode, and the separator, and a sealing member that seals the battery case.

In the lithium secondary battery, the negative electrode includes a negative electrode current collector and a negative electrode active material layer positioned on the negative electrode current collector.

The negative electrode current collector is not particularly limited as long as it does not cause chemical changes to a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used. Also, the negative electrode current collector may generally have a thickness of 3 µm to 500 µm, and like the positive electrode current collector, microscopic irregularities may be formed on a surface of the current collector to strengthen binding force of the negative electrode active material. For example, the negative electrode current collector may be used in various forms including a film, a sheet, a foil, a net, a porous body, a foam body, a non-woven fiber body, etc.

The negative electrode active material layer includes, selectively, a binder and a conductive material, together with the negative electrode active material.

A compound capable of reversible intercalation and deintercalation of lithium may be used as the negative electrode active material. Specific examples may be a carbon-based material including artificial graphite, natural graphite, graphitized carbon fiber, amorphous carbon, etc.; a metal-based material capable of alloying with lithium including Si, Al, Sn, Pb, Zn, Bi, In, Mg, Ga, Cd, Si alloy, Sn alloy, Al alloy, or the like.; a metal oxide capable of doping or dedoping lithium such as SiO_{β}(0<β<2), SnO2, vanadium oxide, and lithium vanadium oxide; or a composite containing the metal-based material and the carbon-based material such as a Si-C composite or a Sn-C composite, and any one or a mixture of two or more thereof may be used. In addition, as the negative electrode active material, a metal lithium thin film may also be used. The negative electrode active material may be included in the amount of 80 wt% to 99 wt% on the basis of the total weight of the negative electrode active material layer.

The binder is a component that helps binding between the conductive material, the active material, and the current collector, and generally is included in the amount of 0.1 wt% to 10 wt% on the basis of the total weight of the negative electrode active material layer. Examples of this binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, various copolymers thereof, etc.

The conductive material is a component for further improving conductivity of the negative electrode active material, and may be included in the amount of 10 wt% or less, and preferably 5 wt% or less on the basis of the total weight of the negative electrode active material layer. The conductive material may not be particularly limited as long as it does not cause chemical changes in the relevant battery and has conductivity, and for example, graphite such as natural graphite or artificial graphite; carbon black including acetylene black, ketjen black, channel black, furnace black, lamp black, thermal black, etc.; a conductive fiber including a carbon fiber, metal fiber, or the like; fluorocarbon; metal powder including aluminum power, nickel powder, etc.; a conductive whisker including zinc oxide, potassium titanate, etc.; a conductive metal oxide such as titanium oxide; a conductive material such as a polyphenylene derivative, and the like may be used.

The negative electrode active material, and selectively, the binder and the conductive material are dissolved or dispersed in a solvent to prepare a negative electrode composite material, then the negative electrode composite material is applied onto the negative electrode current collector, and then dried to prepare the negative electrode active material layer, or casting of the negative electrode composite material is performed on a separate support, and a film separated from the support is then laminated onto the negative electrode current collector to thereby prepare the negative electrode active material layer.

Meanwhile, in the lithium secondary battery, the separator separates the negative electrode and the positive electrode, and provides a movement path of lithium ions, any separators generally used for a lithium secondary battery may be used without particular limitation, and particularly, a separator having low resistance to ion movement in an electrolyte and having excellent electrolyte solution moisture-absorbing ability is preferred. In particular, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high meting point, polyethylene terephthalate fiber, etc. may also be used. Furthermore, a coated separator including a ceramic component or a polymer material may also be used in order to secure heat resistance or mechanical strength, and may be used selectively in a single-layer or multi-layer structure.

In addition, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, etc. which may be used in preparation of a lithium secondary battery, and is not limited thereto.

In particular, the electrolyte may include an organic solvent and a lithium salt.

Any organic solvent may be used as the organic solvent, without particular limitation, as long as it may serve as a medium through which ions involved in an electrochemical reaction of the battery may move. In particular, as the organic solvent, an ester-based solvent including methyl acetate, ethyl acetate, γ-butyrolactone, ε-caprolactone, etc.; an ether-based solvent including dibutyl ether, tetrahydrofuran, or the like; a ketone-based solvent such as cyclohexanone; an aromatic hydrocarbon-based solvent including benzene, fluorobenzene, etc.; a carbonate-based solvent including dimethylcarbonate (DMC), diethylcarbonate (DEC), methylethylcarbonate (MEC), ethylmethylcarbonate (EMC), ethylenecarbonate (EC), propylene carbonate (PC), etc.; an alcohol-based solvent including ethylalcohol, isopropyl alcohol, etc.; nitriles such as R-CN (where, R is a linear, branched, or cyclic C2 to 20 hydrocarbon group, and may include a double-bond aromatic ring or an ether bond); amides such as dimethylformamide; dioxolanes such as 1,3-dioxolane; or sulfolanes may be used. Among these, the carbonate-based solvent is preferred, and a mixture of a cyclic carbonate (for example, ethylene carbonate, propylene carbonate, or the like) having high ionic conductivity and high dielectric constant capable of increasing charging and discharging performance of a battery, and a low-viscosity linear carbonate-based compound (for example, ethylmethyl carbonate, dimethyl carbonate, diethyl carbonate, or the like) is more preferred.

Any compound capable of providing lithium ions that are used in a lithium secondary battery may be used for the lithium salt without particular limitation. In particular, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₃)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₂, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB (C₂O₄)₂ or the like may be used as the lithium salt. The lithium salt may be used in a concentration range of 0.1 to 4.0 M. When the concentration of lithium salt falls within the above range, the electrolyte may have appropriate conductivity and viscosity, and therefore, excellent performance of the electrolyte may be exhibited, and lithium ions may move effectively.

In order to improve lifetime characteristics of the battery, suppress the reduction in battery capacity, and improve discharge capacity of the battery, the electrolyte may also further include at least one additive, in addition to the electrolyte components, such as a halo-alkylene carbonate-based compound such as difluoroethylene carbonate, pyridine, triethylphosphite, triethanolamine, cyclic ether, ethylenediamine, n-glyme, hexamethylphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride. At this time, the additive may be included in the amount of 0.1 to 5 wt% on the basis of the total weight of the electrolyte.

An outer shape of the lithium secondary battery of the present invention is not particularly limited, but may include a cylindrical type using a can, a prismatic type, a pouch type, a coin type, or the like.

Since the lithium secondary battery including the positive electrode active material according to the present invention, as previously described, stably provides charge and discharge capacity and lifetime characteristics, the lithium secondary battery may not only be used as a battery cell used as a power source of a small-sized device such as a mobile phone, a laptop computer, and a digital camera, but may also be preferably used as a unit battery of a battery module for a medium and large-sized device including various battery cells.

Examples of the medium and large-sized device may include a power tool, an electric vehicle, a hybrid electric vehicle, a plug-in hybrid electric vehicle, a system for power storage, and the like, but not limited thereto.

According to another embodiment of the present invention, a battery module including the lithium secondary battery as a unit cell, and a battery pack including the battery module are provided.

Hereinafter, the present invention is described in more detail through particular examples.

### MODE FOR CARRYING OUT THE INVENTION

### [Examples: Preparation of Positive Electrode Active Material]

### Example 1.

4 L of distilled water was put into a coprecipitation reactor (20 L capacity), and then 100 mL of aqueous ammonia solution at a 28 wt% concentration was added thereto while the temperature was maintained at 50 °C. Thereafter, a transition metal solution where NiSO₄, CoSO₄, and MnSO₄ were mixed such that a molar ratio of Ni:Co:Mn became 97.0:0.5:2.5, the aqueous ammonia solution, and a sodium hydroxide solution were added to the coprecipitation reactor, and coprecipitation reaction was performed to form a precursor. The precursor particle was separated and washed, and then dried in an oven at 130 °C to prepare a precursor.

LiOH as a lithium raw material, the prepared precursor, and Al(OH)₃ were mixed such that a molar ratio of Li:(Ni+Co+Mn):Al became 1:0.978:0.022, and the mixture was heat-treated at 720 °C for 20 hours under an oxygen atmosphere to prepare a lithium composite transition metal oxide.

### Example 2.

A precursor was prepared in the same process as that of Example 1 above. LiOH, the prepared precursor, and Al (OH)₃ were mixed such that a molar ratio of Li:(Ni+Co+Mn): Al became 1:0.968:0.032, and the mixture was heat-treated at 720 °C for 20 hours under an oxygen atmosphere to prepare a lithium composite transition metal oxide.

### Comparative Example 1.

A precursor was prepared in the same process as that of Example 1 above. LiOH and the prepared precursor were mixed such that a molar ratio of Li:(Ni+Co+Mn) became 1:1, and the mixture was heat-treated at 720 °C for 20 hours under an oxygen atmosphere to prepare a lithium composite transition metal oxide.

### Comparative Example 2.

A precursor was prepared in the same process as that of Example 1 above. LiOH, the prepared precursor, and Al (OH)₃ were mixed such that a molar ratio of Li:(Ni+Co+Mn): Al became 1:0.989:0.011, and the mixture was heat-treated at 720 °C for 20 hours under an oxygen atmosphere to prepare a lithium composite transition metal oxide.

### Comparative Example 3.

A precursor was prepared in the same process as that of Example 1 above. LiOH, the prepared precursor, and Al (OH)₃ were mixed such that a molar ratio of Li:(Ni+Co+Mn): Al became 1:0.964:0.036, and the mixture was heat-treated at 720 °C for 20 hours under an oxygen atmosphere to prepare a lithium composite transition metal oxide.

### Comparative Example 4.

4 L of distilled water was put into a coprecipitation reactor (20 L capacity), and then 100 mL of aqueous ammonia solution at a 28 wt% concentration was added thereto while the temperature was maintained at 50 °C. Thereafter, a transition metal solution where NiSO₄, CoSO₄, and MnSO₄ were mixed such that a molar ratio of Ni:Co:Mn became 91.0:6.0:3.0, the aqueous ammonia solution, and a sodium hydroxide solution were added to the coprecipitation reactor, and coprecipitation reaction was performed to form a precursor. The precursor particle was separated and washed, and then dried in an oven at 130 °C to prepare a precursor.

LiOH as a lithium raw material, the prepared precursor, and Al (OH)₃ were mixed such that a molar ratio of Li: (Ni+Co+Mn) : Al became 1:0.969:0.031, and the mixture was heat-treated at 720 °C for 20 hours under an oxygen atmosphere to prepare a lithium composite transition metal oxide.

### [Experimental Example]

### Experimental Example 1. Checking Doping Amount

For each of the lithium composite transition metal oxides prepared according to Examples 1 and 2 and Comparative Examples 1 to 4, the amount of Al was measured using inductively coupled plasma optical emission spectrometry (ICP-OES: Optima 7300DV, PerkinElmer), and the amounts of Al relative to the total weight of the lithium composite transition metal oxide and relative to the total number of moles were calculated, and the results were listed in Table 1 below.

**[Table 1]**

| | Composition ratio (mol%) | | | | Doping yield | Amount of Al in oxide | | Al/Ni mol% ratio |
|---|---|---|---|---|---|---|---|---|
| | Ni | Co | Mn | Al | | (ppm) | (mol%) | |
| Example 1 | 94.9 | 0.5 | 2.4 | 2.2 | 93% | 5, 580 | 2.02 | 0.021 |
| Example 2 | 93.9 | 0.5 | 2.4 | 3.2 | 93% | 8,300 | 2.97 | 0.032 |
| Comparative Example 1 | 97.0 | 0.5 | 2.5 | 0.0 | - | 0 | 0 | 0 |
| Comparative Example 2 | 95.9 | 0.5 | 2.5 | 1.1 | 93% | 2,790 | 1.01 | 0.011 |
| Comparative Example 3 | 93.5 | 0.5 | 2.4 | 3.6 | 93% | 9,300 | 3.36 | 0.036 |
| Comparative Example 4 | 87.9 | 6.0 | 3.0 | 3.1 | 93% | 7,868 | 2.8 | 0.032 |

Referring to Table 1 above, it can be seen that in Examples 1 and 2, and Comparative Examples 2 to 4, doping was done at 93% yield, and as a result, the lithium composite transition metal oxides prepared according to Examples 1 and 2 had a molar ratio of Al/Ni finally in a range of 0.015 to 0.034. Meanwhile, in Comparative Example 2 and Comparative Example 3, the molar ratios of Al/Ni were 0.011 and 0.036, respectively, which are out of the range according to the present invention, and in case of Comparative Example 4 where the amount of Ni is less than 90 mol%, the molar ratio of Al/Ni was measured as same as that of Example 2.

### Experimental Example 2. XRD Analysis

For each of the lithium composite transition metal oxides prepared according to Examples 1 and 2 and Comparative Examples 1 and 2 above, a ratio of c/a was measured using X-ray diffraction (XRD) analysis by Cu Kα X-ray in the previously-described method, and the results were as follows.

**[Table 2]**

| | Example 1 | Example 2 | Comparative Example 1 | Comparative Example 2 |
|---|---|---|---|---|
| c/a | 4.9405 | 4.9422 | 4.9362 | 4.9381 |

According to Table 2, the lithium composite transition metal oxides according to Examples 1 and 2 hada ratio of c/a in a range of 4.9400 to 4.9500, which means that the lithium composite transition metal oxides were prepared with highly complete layered structures, compared to those according to Comparative Examples 1 and 2 not having the ratio in the range.

### Experimental Example 3. Measuring Particle Strength

3 g of each of the lithium composite transition metal oxides prepared according to Examples 1 and 2 and Comparative Examples 1 and 2 were collected, and then using a micro compression testing machine (MCT-W500 of Shimadzu), particle strength was measured in a method where pressure was applied more and more to measure a pressure when a particle breaks, and the results were listed in Table 3 below.

**[Table 3]**

| | Example 1 | Example 2 | Comparative Example 1 | Comparative Example 2 |
|---|---|---|---|---|
| Particle strength (MPa) | 145 | 151 | 138 | 140 |

Referring to the results in Table 3 above, it can be seen that the lithium composite transition metal oxides prepared according to Examples 1 and 2 had much more excellent particle strength than the lithium composite transition metal oxides prepared according to Comparative Examples 1 and 2.

This is an effect that is achieved because of greater binding energy between Al and O than binding energy between Ni and O, and accordingly, when the particle strength is high, it is advantageous in that particle fracture is reduced in a rolling process.

### Experimental Example 4. Measuring D₅₀

0.1 g of each of lithium composite transition metal oxide powders prepared according to Examples 1 and 2 and Comparative Examples 1 to 4 above were dispersed in a dispersion medium, and then the dispersion medium was introduced into a laser diffraction particle size measurement instrument (Mastersizer 3000 of Malvern) and irradiated with ultrasonic waves of about 28 kHz in an output of 60 W to measure D50 of each of the positive electrode material powders. The measurement results were listed in Table 4 below.

**[Table 4]**

| | Example 1 | Example 2 | Compara tive Example 1 | Compara tive Example 2 | Compara tive Example 3 | Compara tive Example 4 |
|---|---|---|---|---|---|---|
| D₅₀ (µm) | 11.5 | 11.6 | 11.6 | 11.6 | 11.6 | 11.4 |

### Experimental Example 5. DSC Evaluation

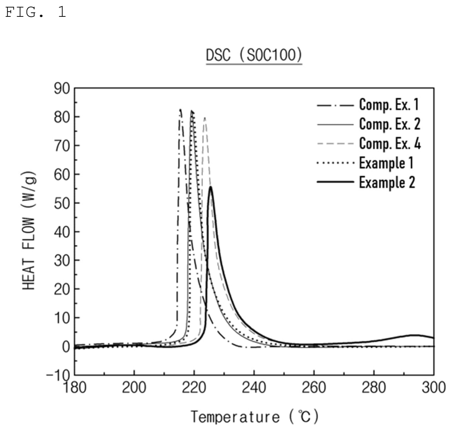

In order to evaluate thermal stability of the lithium composite transition metal oxides prepared according to Examples 1 and 2 and Comparative Examples 1 and 2 above, heat flow was measured using differential scanning calorimetry (HP-DSC of Setaram), and the results were shown in FIG. 1 and Table 3 below.

First of all, the lithium composite transition metal oxideas a positive electrode active material, prepared according to each of Examples 1 and 2 and Comparative Examples 1 and 2 above, carbon black (Li-435 of Denka) as a conductive material, PVDF (KF9709 of Kureha) as a binder, and acrylate (BM-730H of Zeon) as a dispersant were mixed in an NMP solvent in a weight ratio of 95.0:2.0:2.8: 0.2 to prepare a positive electrode slurry. The prepared positive electrode slurry was applied onto one side of an aluminum current collector, then dried at 130 °C, and then pressed to prepare a positive electrode. A porous polyethylene separator was disposed between the prepared positive electrode and a lithium metal negative electrode to prepare an electrode assembly, and then the electrode assembly was positioned inside a battery case, and an electrolyte solution was then injected into the case to prepare a half cell. LiPF₆ at a concentration of 1 M was dissolved in a mixed organic solvent where ethylene carbonate/dimethyl carbonate/diethyl carbonate were mixed in a volume ratio of 3:4:3 to prepare the electrolyte solution.

The prepared half cell was charged with a constant current of 0.2 C to 4.25 V at 25 °C to prepare a SOC 100% cell. The cell prepared at full charge was disassembled and the positive electrode was recovered, the recovered positive electrode was washed with DMC for 30 seconds to remove the electrolyte solution remaining on a surface of the positive electrode, and then dried. The dried positive electrode was punched out according to the size of a pan of the differential scanning calorimetry, and added to the pan together with 20 ml of an electrolyte solution which is the same electrolyte solution as that injected to the halfcell, and the pan was then sealed. Thereafter. the heat flow was measured while increasing the temperature by 10 °C per minute from 25 °C to 300 °C, and the results are as shown in FIG. 1.

Meanwhile, the temperature at which the main peak with the maximum heat flow is measured, and the maximum value of the heat flow were listed in Table 5 below.

**[Table 5]**

| | Example 1 | Example 2 | Comparative Example 1 | Comparative Example 2 |
|---|---|---|---|---|
| Main peak temperature (°C) | 219.4 | 225.4 | 215.5 | 219.1 |
| Maximum heat flow (W/g) | 83.1 | 55.8 | 83.1 | 80.7 |

Referring to Table 5 above and FIG. 1, it can be seen that, when the lithium composite transition metal oxides according to Examples 1 and 2 having a molar ratio of Al/Ni in the range of 0.015 to 0.034 were used as the positive electrode active material, the main peak with the maximum heat flow was high and the maximum value of the heat flow was low, so that the risk of explosion was relatively low even in case of increased internal temperature of a battery.

In particular, in case of Example 2, the maximum value of heat flow was less than 60 W/g, and at the same time, the mainpeak temperature was 220 °C or higher, exhibiting the most excellent thermal stability.

### Experimental Example 6. Evaluation on Capacity and Lifetime

### (1) Preparation of HalfCell

Positive electrodes including the lithium composite transition metal oxides, as positive electrode active materials, prepared according to the examples and comparative examples, and half cells including the same were prepared in the same method as that of Experimental Example 5 above.

### (2)Measuring Initial Capacity and Efficiency

A formation process was performed for each of the half cells prepared according to (1) above, and then the half cell was charged under conditions of CC-CV with 0.2 C (reference capacity 1 C=200 mAh/g) to 4.25 V at 25 °C using a PNE-0506 charging and discharging instrument (manufacturer: PNE Solution Inc.) and discharged under conditions of CC with 0.2 C to 2.5 V to measure initial charge and discharge capacities and initial efficiency, and the results were listed in Table 6 below.

### (3) Evaluation on High-Temperature Lifetime

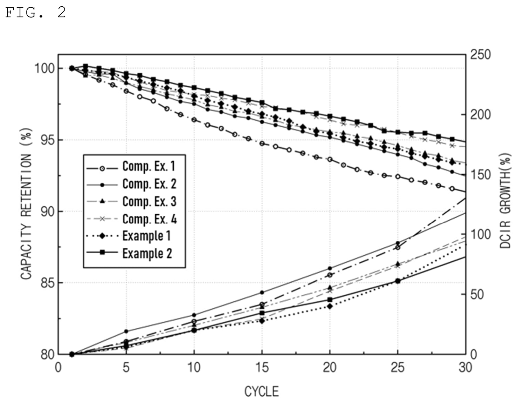

A formation process was performed for each of the half cells prepared according to (1) above, and then the half cell was charged under conditions of CC-CV with 0.33 C (reference capacity 1 C=200mAh/g) to 4.25 V at 45 °C using a PNE-0506 charging and discharging instrument (manufacturer: PNE Solution Inc.) and discharged under conditions of CC with 0.33 C to 2.5 V. Performing charging and discharging as above was considered 1 cycle, and the initial discharge capacity and initial resistance were measured after 1 cycle, and then the same cycle of charging and discharging was repeated 30 times to measure the capacity and resistance. On the basis of the results, the capacity retention rate compared to the initial discharge capacity and the increase rate of resistance compared to the initial resistance were calculated, and the results were shown in FIG. 2 and Table 6.

**[Table 6]**

| | Initial charge capacity | Initial discharge capacity | Initial charge/di scharge | Capacity retention rateat | Increase rate of resistanc |
|---|---|---|---|---|---|
| | at room temperature (mAh/g) | at room temperature (mAh/g) | efficiency at room temperature (%) | hightemperature (%) | e at hightemperature (%) |
| Example 1 | 248.2 | 219.3 | 88.4 | 93.3 | 91.5 |
| Example 2 | 244.8 | 216.4 | 88.4 | 94.8 | 81.5 |
| Comparative Example 1 | 254.4 | 228.1 | 89.7 | 91.4 | 130.2 |
| Comparative Example 2 | 250.9 | 224.2 | 89.4 | 92.5 | 119.3 |
| Comparative Example 3 | 240.2 | 211.1 | 87.9 | 93.4 | 94.1 |
| Comparative Example 4 | 236.5 | 210.6 | 89.1 | 94.5 | 97.5 |

Referring to Table 6 above, it can be seen that all of the cells according to Examples 1 and 2, where the lithium composite transition metal oxides having a molar ratio of Al/Ni in the range of 0.015 to 0.034 were used as positive electrode active materials, had an initial charge and discharge efficiency of 88% or greater, and at the same time, had a high-temperature capacity retention rate of 93% or greater, and had an increase rate of high-temperature resistance of 92% or less.

On the contrary, it can be seen that the cells according to Comparative Examples 1 and 2, where the lithium composite transition metal oxides not containing Al or having a molar ratio of Al/Ni of 0.011 were used as positive electrode active materials, had a high-temperature capacity retention rate and an increase rate of high-temperature resistance which deteriorated significantly. In particular, it can be seen that the increase rate of high-temperature resistance was 110% or greater, which was significantly high.

In addition, it can be seen that the cell according to Comparative Example 3, where the lithium composite transition metal oxide having a molar ratio Al/Ni of 0.036 was used as a positive electrode active material, had a low initial capacity and low efficiency, and had a high increase rate of high-temperature resistance.

Furthermore, the positive electrode active material used in Comparative Example 4 had the same molar ratio of Al/Ni as that of the positive electrode active material used in Example 2, but was different in that the amount of nickel was less than 90 mol%, and therefore, it can be seen that the initial charge and discharge capacity itself was low, and the increase rate of resistance at high temperature was largely increased.

## Claims

1. A positive electrode active material, comprising a lithium composite transition metal oxide including nickel, cobalt, manganese, and aluminum,
wherein an amount of nickel, among metal other than lithium in the lithium composite transition metal oxide, is 90 mol% or greater, and a molar ratio Al/Ni of aluminum to nickel is 0.015 or greater and 0.034 or less.

2. The positive electrode active material of claim 1, wherein the Al/Ni is 0.021 or greater and 0.032 or less.

3. The positive electrode active material of claim 1, wherein the amount of nickel, among metal other than lithium in the lithium composite transition metal oxide, is 93 mol% to 95 mol%.

4. The positive electrode active material of claim 1, wherein an amount of cobalt, among metal other than lithium in the lithium composite transition metal oxide, is 0.1 mol% to 1.0 mol%.

5. The positive electrode active material of claim 1, wherein an amount of aluminum, among metal other than lithium in the lithium composite transition metal oxide, is 1.0 mol% to 5.0 mol%.

6. The positive electrode active material of claim 1, wherein the lithium composite transition metal oxide has a composition represented by Chemical Formula 1 below:
[Chemical Formula 1] Li₁₊ₓ(NiₐCo_{b}Mn_{c}Al_{d}M1ₑ)O₂
in Chemical Formula 1 above,
M1 is one or more selected from the group consisting of Ti, Zr, W, Mo, Nb, Cu, Fe, V, Cr, Zn, In, Ta, Y, La, Sr, Ga, Sc, Gd, Sm, Ca, Ce, Mg, and B, and
x, a, b, c, d, and e satisfy -0.2≤x≤0.2, 0.90≤a<1, 0<b≤0.01, 0<c≤0.05, 0<d≤0.05, and 0≤e≤0.05, respectively, and a+b+c+d+e=1.

7. The positive electrode active material of claim 1, wherein the positive electrode active material comprises a primary particle and a secondary particle in which the primary particles are aggregated, and
a ratio c/a of a length in a c-axis direction to a length in an a-axis direction of the primary particle is 4.9400 to 4.9500.

8. The positive electrode active material of claim 1, wherein a particle strength of the positive electrode active material is 142 MPa to 160 MPa.

9. The positive electrode active material of claim 1, wherein a peak with a maximum heat flow is observed at 219 °C to 230 °C when a heat flow of the positive electrode active material is measured using differential scanning calorimetry (DSC).

10. The positive electrode active material of claim 1, wherein a maximum value of heat flow of the positive electrode active material measured in a range of 25 °C to 300 °C using differential scanning calorimetry (DSC) is 85.0 W/g or less.

11. A positive electrode comprising:
a positive electrode current collector; and
a positive electrode active material layer provided on at least one side of the positive electrode current collector,
wherein the positive electrode active material layer includes the positive electrode active material according to claim 1.

12. A lithium secondary battery comprising:
the positive electrode according to claim 11;
a negative electrode including a negative electrode active material;
a separator disposed between the positive electrode and the negative electrode; and
an electrolyte.
